(19) Europäisches Patentamt

European Patent Office

Office européen des brevets

(11) Veröffentlichungsnummer : **0 512 327 B1**

# (12) EUROPÄISCHE PATENTSCHRIFT

(45) Veröffentlichungstag der Patentschrift :
**24.05.95 Patentblatt 95/21**

(51) Int. Cl.⁶ : **G01D 5/245**

(21) Anmeldenummer : **92106916.7**

(22) Anmeldetag : **23.04.92**

(54) **Positionsmesseinrichtung.**

(30) Priorität : **03.05.91 DE 4114419**

(43) Veröffentlichungstag der Anmeldung :
**11.11.92 Patentblatt 92/46**

(45) Bekanntmachung des Hinweises auf die
Patenterteilung :
**24.05.95 Patentblatt 95/21**

(84) Benannte Vertragsstaaten :
**DE FR GB IT**

(56) Entgegenhaltungen :
**WO-A-89/11080**
**US-A- 5 012 238**

(73) Patentinhaber : **Dr. Johannes Heidenhain GmbH**
**Postfach 12 60**
**D-83292 Traunreut (DE)**

(72) Erfinder : **Kranitzky, Walter, Dipl.-Phys. Dr.**
**Innstrasse 15**
**W-8220 Traunstein (DE)**

## Beschreibung

Die Erfindung bezieht sich auf eine Positionsmeßeinrichtung gemäß dem Oberbegriff des Anspruches 1. Derartige Positionsmeßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Bei solchen Positionsmeßeinrichtungen unterscheidet man zwischen inkrementalen Längen- oder Winkelmeßeinrichtungen und absoluten Längen- oder Winkelmeßeinrichtungen (Codemeßeinrichtungen).

Eine inkrementale Positionsmeßeinrichtung weist einen Teilungsträger mit einer inkrementalen Teilung auf, die von einer Abtasteinrichtung zur Erzeugung von periodischen Abtastsignalen abgetastet wird, aus denen in einer Auswerteeinrichtung Zählimpulse für jedes Teilungsinkrement gewonnen werden. Die Zählung dieser Zählimpulse in einem Zähler liefert den momentanen Positionsmeßwert und erfolgt jeweils von frei wählbaren Meßbezugslagen dieser inkrementalen Teilung ausgehend; diesen Meßbezugslagen können zur gegenseitigen Unterscheidung codierte Referenzmarken absolut zugeordnet sein.

Die an den Referenzmarken erzeugten Referenzimpulse können auf verschiedene Weise verwertet werden, z.B. zum Reproduzieren der Nullbezugslage im Zähler, zum Anfahren einer bestimmten Nullbezugslage zu Beginn einer Messung oder zur Kontrolle der Zählergebnisse des Zählers sowie zur Auswertung in einer nachgeschalteten numerischen Steuerung.

Aus der DE-A-12 58 120 ist eine Längenmeßeinrichtung bekannt, bei der zwei stetige Strichfolgen unterschiedlicher Intervallänge auf einer Nivellierlatte vorgesehen sind. In einem Teilungsbereich, welcher der Länge des kleinsten gemeinsamen Vielfachen der Intervallängen der beiden Strichfolgen entspricht, werden die Restintervalle zwischen dem Index der Ablesevorrichtung und den diesem in steigendem oder fallendem Teilungssinn nächstliegenden Teilstrichen der Strichfolgen nacheinander mikrometrisch gemessen und aus den so erhaltenen Mikrometerablesungen die Lage des Index der Ablesevorrichtung in bezug auf den Teilungsnullpunkt berechnet.

Eine weitere Positionsmeßeinrichtung ist aus der WO-A-89/11080 bekannt. Dort wird folgendes beschrieben:

Um in einer Positionsmeßeinrichtung praktisch jederzeit ein lagecodiertes Signal zu erzeugen, werden zwei Spuren mittels zweier Sensoren abgetastet, die je ein sinusförmiges Signalpaar (cos $\alpha$; sin $\alpha$; cos $\beta$, sin $\beta$) oder ein ähnliches periodisches Signal mit einer jederzeit definierten Phasenlage erzeugen, deren Periodenlänge sich wie n/n+1 verhalten. Der gesuchte Relativabstand ergibt sich dann als Differenz der beiden Phasenlagen.

Der Erfindung liegt die Aufgabe zugrunde, für die Auswertung der so gebildeten Signalpaare eine einfache Einrichtung anzugeben, die zuverlässig arbeitet und bei der der absolute Lage-Istwert einfach zu ermitteln ist.

Diese Aufgabe wird von einer Positionsmeßeinrichtung mit den Merkmalen des Anspruches 1 gelöst.

In den abhängigen Ansprüchen finden sich Merkmale, durch die die Erfindung noch weiter ausgestaltet wird.

Besonders vorteilhaft ist, daß lediglich zwei Inkrementalspuren benötigt werden, um eine derartige Positionsmeßeinrichtung als Codedrehgeber zu schaffen. Die Anzahl der Teilungsinkremente kann dabei so hoch sein, daß sich eine nahezu ideale Sinusspannung ergibt. Maßnahmen zur Ausfilterung der Grundwelle des Sinus (DE-A-36 16 144) können die Genauigkeit zusätzlich erhöhen.

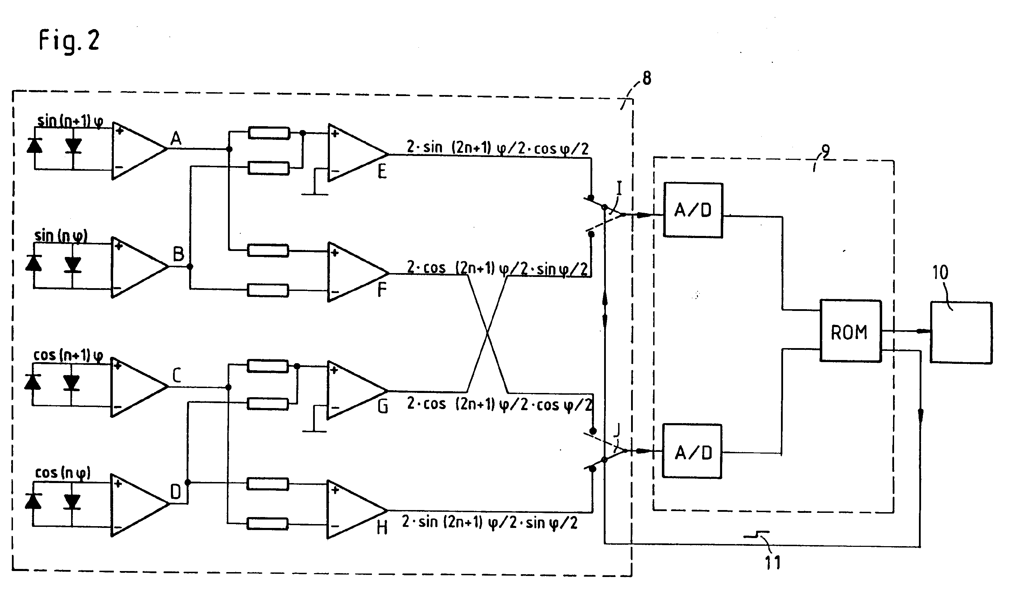

Wesentlich ist, daß sich die Anzahl der Teilungsinkremente der beiden Spuren um eins unterscheiden. Spur "1" soll z.B. n Striche, Spur "2" n+1 Striche aufweisen. An beiden Spuren werden in je zwei Abtaststellen um 90 Grad phasenverschobene Signale erzeugt, deren Bezeichnungen aus Figur 2 zu entnehmen sind.

Das Verfahren stützt sich auf folgende trigonometrische Formeln:

$$A + B = \sin \alpha + \sin \beta = 2 * \sin \frac{\alpha + \beta}{2} * \cos \frac{\alpha - \beta}{2},$$

$$A - B = \sin \alpha - \sin \beta = 2 * \cos \frac{\alpha + \beta}{2} * \sin \frac{\alpha - \beta}{2},$$

$$C + D = \cos \alpha + \cos \beta = 2 * \cos \frac{\alpha + \beta}{2} * \cos \frac{\alpha - \beta}{2},$$

$$C + D = \cos \alpha - \cos \beta = 2 * \sin \frac{\alpha + \beta}{2} * \sin \frac{\alpha - \beta}{2},$$

Setzt man $\alpha = (n+1)\,\varphi$ und
$\beta = n\,\varphi$   so ergibt sich:

$$E = \sin(n + 1)\varphi + \sin n\varphi = 2 * \sin (2n + 1)\varphi/2 * \cos \varphi/2$$
$$F = \sin(n + 1)\varphi - \sin n\varphi = 2 * \cos (2n + 1)\varphi/2 * \sin \varphi/2$$
$$G = \cos(n + 1)\varphi + \cos n\varphi = 2 * \cos (2n + 1)\varphi/2 * \cos \varphi/2$$

$$H = -\cos(n+1)\varphi + \cos n\varphi = 2 * \sin(2n+1)\varphi/2 * \sin \varphi/2$$

Es entstehen also Sinusspannungen der Periode $(2n+1)\varphi/2$, die mit der Sinus-, bzw. Cosinusfunktion des einhalbfachen Winkels moduliert sind. Die Summen- bzw. Differenzbildung der Eingangssignale A bis D läßt sich in verschiedener Weise durchführen, z.B. digital oder analog.

Mit Hilfe der Zeichnungen soll die Erfindung anhand eines Ausführungsbeispiels für analoge Verknüpfung noch näher erläutert werden.

Es zeigt

Figur 1      einen Codedrehgeber in schematischer Darstellung;

Figur 2      ein Prinzipschaltbild zur Signalauswertung und

Figur 3      Signaldiagramme von Abtastsignalpaaren.

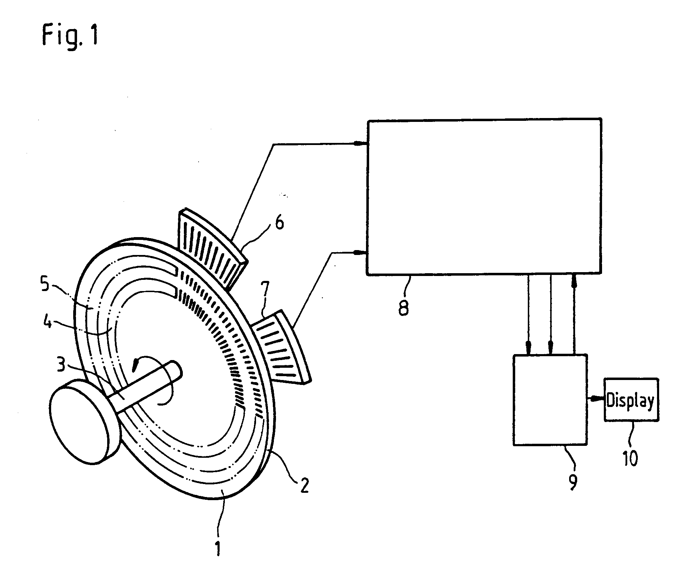

Ein in Figur 1 schematisch dargestellter Codedrehgeber 1 weist auf seiner Teilscheibe 2 - die auf einer Welle 3 befestigt ist - zwei Inkrementalteilungen 4 und 5 auf. Eine der Inkrementalteilungen 5 weist n Teilungsinkremente auf, die andere Inkrementalteilung 4 weist hingegen (n+1) Teilungsinkrement auf.

Die Inkrementalteilungen 4 und 5 werden von Abtasteinrichtungen 6 und 7 in bekannter Weise abgetastet, so daß sie jeweils ein Paar A und C sowie B und D von gegeneinander um 90° phasenverschobener Signale A bis D liefern. In einer Auswerteschaltung 8 werden die Signale A bis D aufbereitet und in einer Rechnereinheit 9 wird die relative Phasenlage der Signalpaare ermittelt, daraus der absolute Winkelwert gewonnen und am Display 10 als absoluter Positionswert angezeigt.

Die Signalaufbereitung wird im folgenden anhand der Figur 2 noch näher beschrieben, wobei die Signale A, B, C, D sowie E, F, G, H bereits in der Beschreibungseinleitung erläutert wurden. Die Signale A und C sowie die Signale B und D sind in der Auswerteschaltung 8 analog verknüpft worden.

Durch die Verknüpfung in der Auswerteschaltung 8 ergeben sich Signalpaare E und H sowie F und G jeweils als Produkt eines Signales mit der Periode $\varphi/2$ und eines Signales mit der Periode $(2n+1)\varphi/2$. Die Signalpaare verhalten sich jeweils wie die üblichen Ausgangssignale eines inkrementalen Drehgebers als Sinus- und Cosinussignale mit der Periode $\varphi/2$, wobei die Amplitude mit der Periode $(2n+1)\varphi/2$ moduliert wird.

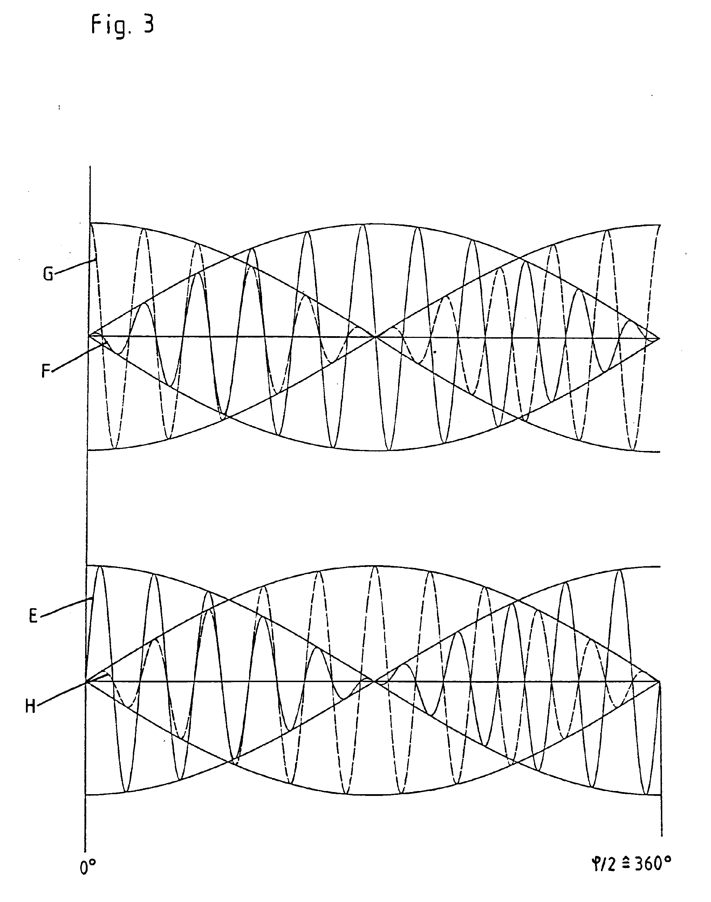

Die Besonderheit der erfindungsgemäßen Signalauswertung liegt darin, daß das eine Signal des Signalpaares immer dann sein Maximum hat, wenn das andere sein Minimum hat. Dieser Sachverhalt soll durch Figur 3 verständlich gemacht werden, in der jeweils für ein Signalpaar ein Signaldiagramm dargestellt ist. Im oberen Teil von Figur 3 ist das Signal G gestrichelt dargestellt; es entspricht der Funktion $2*\cos(n+1)\varphi/2*\cos \varphi/2$. Das andere Signal F mit der Funktion $2*\cos(2n+1)\varphi/2 *\sin \varphi/2$ ist mit Vollinie dargestellt und es ist erkennbar, daß das Signal F im Minimum beginnt, während Signal G im Maximum beginnt, während bei $\varphi/4$ das Signal G sein Minimum und das Signal F sein Maximum erreicht.

In entsprechender Weise ist das Sinus-Signalpaar E und H im unteren Teil von Figur 3 aufgetragen. Die Einhüllende des mit gestrichelter Linie dargestellten Signales H ($2*\sin(2n+1)\varphi/2*\sin \varphi/2$) beginnt im Minimum, während die Einhüllende des Signales E ($2*\sin(2n+1)\varphi/2*\cos \varphi/2$) im Maximum beginnt. Bei $\varphi/4$ hat hingegen das Signal H sein Maximum und Signal E sein Minimum erreicht.

Das Verhältnis der jeweiligen Amplituden gibt jeweils den Drehwinkel des Codedrehgebers 1 als absolute Winkelposition an.

Obwohl immer das Verhältnis der jeweiligen Amplituden die Winkelposition bestimmt, kann aufgrund der zu kleinen Signalamplituden die Winkelbestimmung unsicher werden.

Für jeden beliebigen Winkel ist jedoch die Amplitude einer der beiden Kurven größer als 0.7 mal die Maximalamplitude. Es genügt also, die Amplituden der beiden Vektoren zu vergleichen und jeweils den größeren zur Auswertung des Winkels heranzuziehen. Der Vergleich kann nach einer arithmetischen Betragsbildung (digitale Multiplizierer) oder durch Auswertung in einer Phasentabelle ROM geschehen. In jedem Fall wird ein Signal erzeugt, welches dazu dient, über zwei Multiplexer I und J die als Umschalter (in Figur 2) dargestellt sind entweder das Signalpaar E/H oder F/G an die A/D - Wandler zu legen.

Die Amplituden können auch einzeln gegen einen Grenzwert, z.B. 0.7 mal der Maximalamplitude verglichen werden.

Von einem vergleichsabhängigen Signal 11 aus der Rechnereinheit 9 werden die als Umschalter I und J dargestellten Multiplexer angesteuert.

Bei entsprechender Auslegung der Inkrementalteilungen ist auch eine linear arbeitende Absolut-Meßeinrichtung realisierbar.

**Patentansprüche**

1.      Positionsmeßeinrichtung (1), insbesondere Codemeßeinrichtung, mit mehreren periodischen Meßteilungen (4, 5), deren Teilungsperioden geringfügig voneinander abweichen, und bei denen durch die Abtastung der periodischen Teilungen (4, 5) periodische Abtastsignalpaare (A und C sowie B und D) erzeugt werden und bei der im Verwendungsfall für jede Meßteilung (4, 5) ein erstes Signal definierter erster Phasenlage (A bzw. B) und ein zweites Signal (C bzw. D) definierter zweiter Phasenlage erzeugt, in einer Auswerteschaltung (8) miteinander verknüpft und gewandelt werden, wobei die Signale (A, B, C, D) jeweils zweier Meßteilungen (4, 5) so miteinander verknüpft werden, daß jeweils beide Signale (A, B) definierter erster Phasenlage zueinander addiert und voneinander subtrahiert werden, ebenso wie die Signale (C, D) der definierten zweiten Phasenlage und daß die so gewandelten Signalpaare (E und H bzw. F und G) in einer Rechnereinheit (9) bezüglich ihrer Amplitude verglichen werden, und daß in Abhängigkeit vom Amplitudenvergleich jeweils das Signalpaar (E und H oder F und G) mit der größeren Amplitude zur Ermittlung des absoluten Positionswertes herangezogen wird.

2. Positionsmeßeinrichtung nach Anspruch 1, dadurch gekennzeichnet, daß in der Auswerteschaltung (8) Multiplexer als Umschalter (I, J) vorgesehen sind, die über ein Steuersignal (11) vergleichsabhängig angesteuert werden.

3. Positionsmeßeinrichtung nach Anspruch 1, dadurch gekennzeichnet, daß der Amplitudenvergleich nach einer arithmetischen Betragsbildung in der Rechnereinheit (9) erfolgt.

4. Positionsmeßeinrichtung nach Anspruch 1, dadurch gekennzeichnet, daß der Amplitudenvergleich mittels einer Phasentabelle in der Rechnereinheit (9) erfolgt.

5. Positionsmeßeinrichtung nach Anspruch 1, dadurch gekennzeichnet, daß die Amplituden miteinander verglichen werden.

6. Positionsmeßeinrichtung nach Anspruch 1, dadurch gekennzeichnet, daß die Amplituden mit einem vorgegebenen Grenzwert verglichen werden.

7. Positionsmeßeinrichtung nach Anspruch 1, dadurch gekennzeichnet, daß die Auswerteschaltung (8) analog arbeitet.

8. Positionsmeßeinrichtung nach Anspruch 1, dadurch gekennzeichnet, daß die Auswerteschaltung digital arbeitet.

## Claims

1. Position measuring device (1), in particular code measuring device, with several periodic measuring graduations (4, 5) of which the graduation periods differ from each other slightly, and in which periodic scanning signal pairs (A and C as well as B and D) are generated by scanning the periodic graduations (4, 5) and in which, in case of use, for each measuring graduation (4, 5) a first signal with a predefined first phase position (A or B) and a second signal (C or D) with a predefined second phase position are generated, linked together in an analyser circuit (8) and ccnverted, wherein the signals (A, B, C, D) of in each case two measuring graduations (4, 5) are linked together in such a way that in each case both signals (A, B) with the predefined first phase position are added together and subtracted from each other, like the signals (C, D) with the predefined second phase position, and in that the signal pairs (E and H or F and G) converted in this way are compared with respect to their amplitude in a computer unit (9), and in that as a function of the amplitude comparison in each case the signal pair (E and H or F and G) with the greater amplitude is used to determine the absolute position value.

2. Position measuring device according to claim 1, characterised in that in the analyser circuit (8) multiplexers are provided as change-over switches (I, J) which are triggered by a control signal (11) as a function of the comparison.

3. Position measuring device according to claim 1, characterised in that the amplitude comparison takes place after arithmetic formation of an amount in the computer unit (9).

4. Position measuring device according to claim 1, characterised in that the amplitude comparison takes place by means of a phase table in the computer unit (9).

5. Position measuring device according to claim 1, characterised in that the amplitudes are compared with each other.

6. Position measuring device according to claim 1, characterised in that the amplitudes are compared with a predetermined limit value.

7. Position measuring device according to claim 1, characterised in that the analyser circuit (8) operates in analogue fashion.

8. Position measuring device according to claim 1, characterised in that the analyser circuit (8) operates in digital fashion.


**Revendications**

1. Dispositif de mesure de position (1), en particulier dispositif de mesure codé, comprenant plusieurs graduations de mesure période (4,5) dont les périodes de graduation diffèrent légèrement les unes des autres, l'exploration des graduations périodiques (4, 5) produisant des paires périodiques de signaux d'exploration (A et C ainsi que B et D) et, en cas d'utilisation, un premier signal (A ou B) ayant une première position de phase définie et un deuxième signal (C ou D) ayant une seconde position de phase définie étant produits pour chaque graduation de mesure (4, 5), étant combinés l'un avec l'autre et convertis dans un circuit d'exploitation (8), les signaux (A, B, C, D) de chaque fois deux graduations de mesure (4, 5) étant combinés de manière que chaque fois les deux signaux (A, B) ayant la première position de phase définie soient additionnés l'un avec l'autre et soustraits l'un de l'autre, de même que les signaux (C, D) ayant la seconde phase définie et que les paires de signaux (E et H ou F et G) ainsi convertis soient comparés dans une unité de calcul (9), en ce qui concerne leur amplitude, et qu'en fonction de la comparaison des amplitudes, la paire de signaux (E et H ou F et G) ayant la plus grande amplitude soit utilisée chaque fois en vue de la détermination de la valeur de position absolue.

2. Dispositif de mesure de position selon la revendication 1, caractérisé par le fait que le circuit d'exploitation (8) comprend des multiplexeurs en tant que commutateurs (I, J) pouvant être commandés en fonction de la comparaison par un signal de commande (11).

3. Dispositif de mesures de position suivant la revendication 1, caractérisé par le fait que la comparaison d'amplitude a lieu après formation de valeur arithmétique dans l'unité de calcul (9).

4. Dispositif de mesure de position suivant la revendication 1, caractérisé par le fait que la comparaison d'amplitude a lieu au moyen d'un tableau de phase dans l'unité de calcul (9).

5. Dispositif de mesure de position suivant la revendication 1, caractérisé par le fait que les amplitudes sont comparées l'une avec l'autre.

6. Dispositif de mesure de position suivant la revendication 1, caractérisé par le fait que les amplitudes sont comparées avec une valeur limite prédéterminée.

7. Dispositif de mesure de position suivant la revendication 1, caractérisé par le fait que le circuit d'exploitation (8) fonctionne par voie analogique.

8. Dispositif de mesure de position suivant la revendication 1, caractérisé par le fait que le circuit d'exploitation fonctionne par voie numérique.

Fig. 1

Fig.2

Fig. 3